# EUROPEAN PATENT APPLICATION

(11) **EP 4 738 040 A1**
(43) Date of publication of application: **06.05.2026**
(21) Application number: 24386124.2
(22) Date of filing: 01.11.2024
(51) Int. Cl.: G05D 1/242, G05D 1/667, G05D 105/28, G05D 107/70, G05D 109/10, G05D 111/10, B66F 9/00, G01S 17/931, G06T 7/73, G06V 20/00

(54) **LOAD HANDLING DEVICE**

(71) Applicant: Ocado Innovation Limited, Hatfield, Hertfordshire AL10 9UL (GB)
(72) Inventor: The designation of the inventor has not yet been filed
(74) Representative: Ocado Group IP Department

(57) **Abstract**

The present invention provides a load handling device comprising one or more sensors, preferably optical sensors. The sensor(s) may be used to illuminate a platform, such as a pallet. The data received from the sensor(s) may then be processed to form a point cloud. The data in the point cloud can be processed to identify the structures that form the platform such that the position and/or orientation of the platform relative to the load handling device can be determined. The load handling device may then use this platform position and/or orientation information when moving to lift the platform.

## Description

The disclosure relates to a load handling device, and in particular to an autonomous vehicle which can lift move pallets, for example within a storage facility.

### Background

A robotic vehicle (e.g., a robotic truck) can include forks (also referred to as tynes or tines) to enable the vehicle to pick up and move object(s) (e.g., a pallet) in an environment such as a warehouse.

A platform such as a pallet may be used in a warehouse to support goods and to enable the goods to be carried from one location to another while on the platform. The platform includes opening(s) or slot(s) to facilitate lifting of the platform by a vehicle such as a forklift truck. Platforms can vary in size, shape, weight, form factor, etc. The variance in the size and design of a platform can cause problems with the lifting and movement of such platforms. The autonomous operation of such robotic vehicles is made more efficient by the robotic vehicle being able to lift platforms in an effective and repeatable manner.

### Summary

According to a first aspect of the present disclosure, there is provided a robotic vehicle comprising: one or more optical sensors and a processor circuit, the processor circuit being configured, in use, to: cause the one or more optical sensors to illuminate a platform; receive data from the one or more optical sensors; create a single point cloud from the data received from the one or more optical sensors; and process the single point cloud to determine the position and orientation of the platform.

Such a determination of the position and orientation of the platform enables a robotic vehicle to insert a lifting mechanism into the platform such that the platform can be lifted and then carried by the robotic vehicle to a further location. The determination of the position and orientation of the platform enables the robotic vehicle to operate more efficiently.

The processor circuit may be configured to identify a plurality of platform structures in the single point cloud. The processor circuit may be configured to fit a first line to the data points representing the plurality of platform structures in the single point cloud, the line representing a leading edge of the platform.

The processor circuit may be configured to divide the leading edge line into a plurality of portions such that one or more of the portions of the leading edge line correspond to platform structures and one or more of the portions of the leading edge line correspond to regions between platform structures. The processor circuit may be configured to further process the single point cloud to identify one or more internal platform structures. The processor circuit may be configured to fit a second line to the data points representing each of the one or more internal platform structures, wherein the one or more second lines are substantially perpendicular to the first line representing the leading edge of the platform.

The processor circuit may be configured to fit a third line to the data points representing each of the one or more internal platform structures, wherein the one or more fitted lines are substantially parallel to the first line representing the leading edge of the platform. The processor circuit may be configured to refine the data such that the fitted lines are re-fitted to the data points in the single point cloud.

The robotic vehicle may be re-positioned and/or re-orientated in response to the determination of the position and orientation of the platform. The robotic vehicle may further comprise a lifting mechanism configured to be inserted into the interior of the platform and then actuated to lift the platform.

According to a second aspect of the present disclosure, there is provided a method of operating a robotic vehicle, the method comprising: Illuminating a platform using one or more optical sensors; receiving data from the one or more optical sensors; creating a single point cloud from the data received from the one or more optical sensors; and processing the single point cloud to determine the position and orientation of the platform.

The method may comprise identifying a plurality of platform structures in the single point cloud. A first line may be fitted to the data points representing the plurality of platform structures in the single point cloud, the line representing a leading edge of the platform. The leading edge line may be divided into a plurality of portions such that one or more of the portions of the leading edge line correspond to platform structures and one or more of the portions of the leading edge line correspond to regions between platform structures.

The single point cloud may be processed further to identify one or more internal platform structures. A second line may be fitted to the data points representing each of the one or more internal platform structures, wherein the one or more fitted second lines are substantially perpendicular to the first line representing the leading edge of the platform. A third line may be fitted to the data points representing each of the one or more internal platform structures, wherein the one or more fitted third lines are substantially parallel to the line representing the leading edge of the platform. The data may be refined such that the fitted lines are re-fitted to the data points in the single point cloud.

The method may further comprise re-positioning and/or re-orientating the robotic vehicle in response to the determination of the position and orientation of the platform. After the robotic vehicle has been re-positioned and/or re-orientated then the robotic vehicle may be moved towards the platform such that a lifting mechanism can be inserted into the interior of the platform. Once the lifting mechanism, for example a pair of forks, then the forks may be lifted such that platform, and any load received thereon, may be lifted.

According to a third aspect of the present disclosure, there is provided a non-transitory computer-readable medium having instructions stored thereon that cause at least one processor circuit to at least: cause one or more optical sensors to illuminate a platform; receive data from the one or more optical sensors; create a single point cloud from the data received from the one or more optical sensors; and process the single point cloud to determine the position and orientation of the platform.

### Brief description of the drawings

Embodiments of the invention will now be described by way of example only with reference to the accompanying drawings, in which like reference numbers designate the same or corresponding parts, and in which:
Figure 1 shows a schematic depictions of a robotic vehicle according to an example of the present disclosure;
Figure 2 shows a schematic depiction of the first and second sensors illuminating the pallet elements;
Figures 3a and 3b shows schematic depictions of the data which is obtained from the first and second sensors;
Figure 4 shows a schematic depiction of the processing of the data shown in Figure 3a;
Figure 5 shows a schematic depiction of the data shown in Figure 4;
Figure 6 shows a schematic depiction of a number of regions of interest (ROIs) being defined within the point cloud;
Figure 7 shows a schematic depiction of the data shown in Figure 6 after line fitting has been performed on the data in the ROIs;
Figure 8 shows a schematic depiction of the data shown in Figure 7 after a data refinement process has taken place;
Figure 9 shows a schematic depiction of the point cloud data shown in Figure 3b;
Figure 10 shows a schematic depiction of the data shown in Figure 9;
Figure 11 shows a schematic depiction of a number of ROIs being defined within the point cloud;
Figure 12 shows a schematic depiction of the data shown in Figure 11 after line fitting has been performed on the data in the ROIs;
Figure 13 shows a schematic depiction of the data and fitted lines of Figure 12, in which a further ROI is added;
Figure 14 shows a schematic depiction of the data shown in Figure 13 after line fitting has been performed on the data in the further ROI;
Figure 15 shows a schematic depiction of the data shown in Figure 14 after a data refinement process has taken place;
Figure 16 shows a schematic depiction of a method according to the present disclosure;
Figure 17 shows a schematic depiction of further aspects of the robotic vehicle; and
Figure 18 shows a schematic depiction of a computer device which may be comprised within the robotic vehicle.

### Detailed description

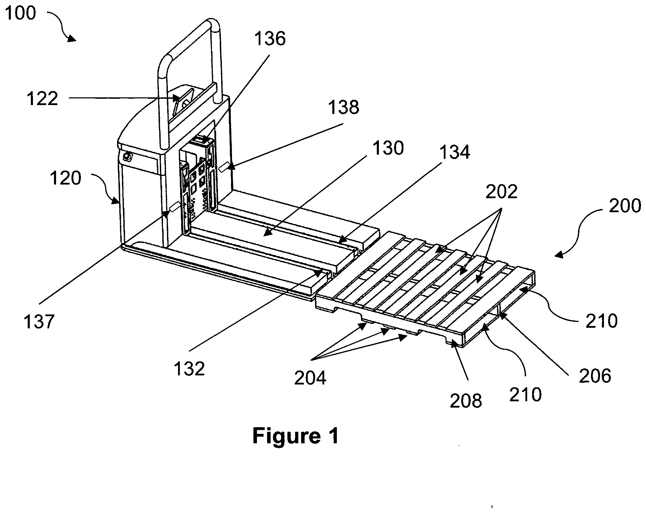

Figure 1 shows a schematic depiction of a robotic vehicle 100 according to an example of the present disclosure. The robotic vehicle 100 comprises a body 120 in which are housed multiple components used in the operation of the vehicle, for example control electronics, a drive module which can be controlled by the control electronics to control the movement of the robotic vehicle and other actions of the robotic vehicle. The robotic vehicle further comprises a platform support area 130 which is located at the rear of the robotic vehicle. The robotic vehicle further comprises a lifting shuttle 136 which is coupled to a first fork 132 and second fork 134. In operation, the lifting shuttle can be advanced from the body of the robotic vehicle, such that the first fork 132 and the second fork 134 are advanced from underneath the platform support area 130. The first fork and the second fork may be inserted into the interior of a platform (for example a pallet) such that that the platform may be lifted from the surface in which it is resting (for example the floor) to a height which is above that of the platform support area 130. The robotic vehicle may then advance such that the platform can be lowered onto the platform support area 130 and such that the lifting shuttle 136 is received within the body of the robotic vehicle. An example of such a robotic vehicle is disclosed in the Applicant's co-pending international patent application PCT/EP2024/064402. The body of the robotic vehicle may comprise a first sensor 137 and a second sensor 138 arranged such that the first and second sensors can view a platform, such as a pallet, as the platform support area 130 of the robotic vehicle is manoeuvred when approaching a platform.

The pallet 200 shown in Figure 1 comprises a plurality of upper deck boards 202 on which a load may be received. The pallet also comprises a plurality of lower deck boards 204 which are in contact with the ground (or the surface upon which the pallet is resting). The upper deck boards 202 and the lower deck boards 204 are connected by a number of stringers, in this example two external stringers 208, which are located at the edge of the pallet, and one internal stringer 206. The combination of the upper deck boards, lower deck boards and the stringers define apertures 210 on opposed faces of the pallet into which the forks of a robotic vehicle can be inserted.

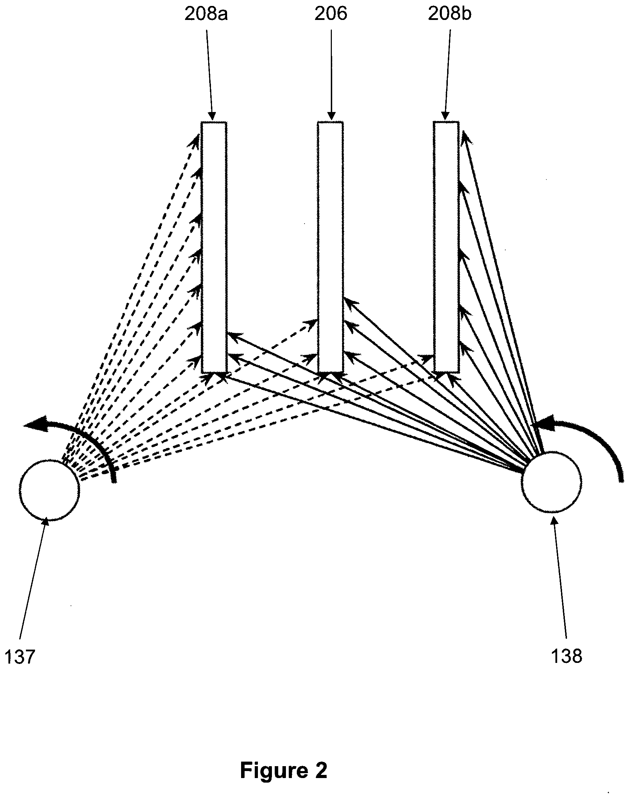

The pallet described above with reference to Figure 1 is known as a stringer pallet. A known stringer pallet is a GMA pallet. In an alternative arrangement, the pallet may be a type of pallet known as a block pallet, in which the stringers are replaced with a number of blocks that connect the upper deck boards to the lower deck boards. A known block pallet is a EUR2 pallet Typically, a block pallet comprises nine blocks, with one block being received at substantially the same position as the ends and the midpoint of each of the three stringers shown in Figures 1 and 2. Some types of pallets do not comprise lower deck boards such that the pallet rests on the floor on the stringers (or a combination of stringers and blocks).

It will be understood that for the efficient operation of a robotic vehicle as described above that the robotic vehicle will need to be able to detect an open side of a pallet, that is a side of the pallet from which the robotic vehicle can lift the pallet, and then move such that it is in an appropriate position and orientation relative to the pallet to enable a successful lift to be performed.

Figure 2 shows a schematic depiction illustrating how the first and second sensors 137 138 can be used to determine the location and orientation of pallet elements. For the sake of clarity, only the interior 206 and exterior 208a 208b stringers are shown in Figure 2. The first and second sensors 137 138 may comprise lidar sensors, which rotate as they scan. The reflected signals that are detected at the first sensor 137 are shown with dashed lines whereas the reflected signals that are detected at the second sensor 138 are shown with solid lines. It can be seen that the first sensor 137 illuminates:
- the front and the left-hand side face of the first exterior stringer 208a
- the front and a portion of the left-hand side face of the interior stringer 206 and
- the front and a smaller portion of the left-hand side face of the second exterior stringer 208b

Similarly, the second sensor illuminates:
- the front and the right-hand side face of the second exterior stringer 208b
- the front and a portion of the right-hand side face of the interior stringer 206 and
- the front and a smaller portion of the right-hand side face of the first exterior stringer 208a

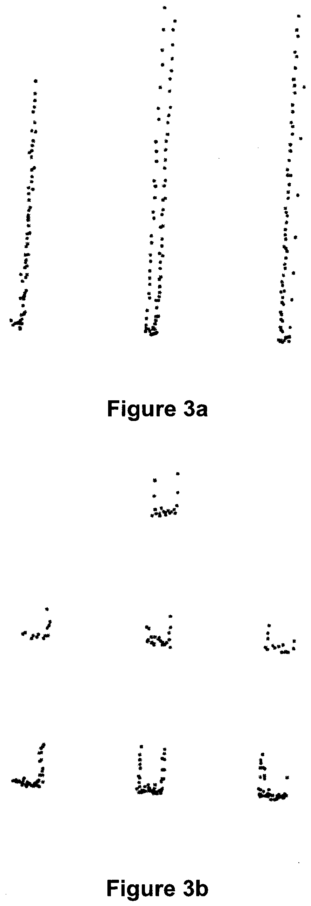

The data that is collected by the first and second sensors may be processed in order to determine the location and orientation of the pallet stringers. This information can then be used by the robotic vehicle when lifting the pallet, as it is necessary for the pallet to be lifted successfully by inserting the forks of the robotic vehicle into the apertures which are partially defined by the stringer positions. Figure 3 shows schematic depictions of the data which is obtained from the first and second sensors. The data that is generated by the sensors is merged to create a single point cloud. Specifically, Figure 3a shows the point cloud which is obtained when the first and second sensors scan a GMA pallet and Figure 3b shows the point cloud which is obtained when the first and second sensors scan a EUR2 pallet.

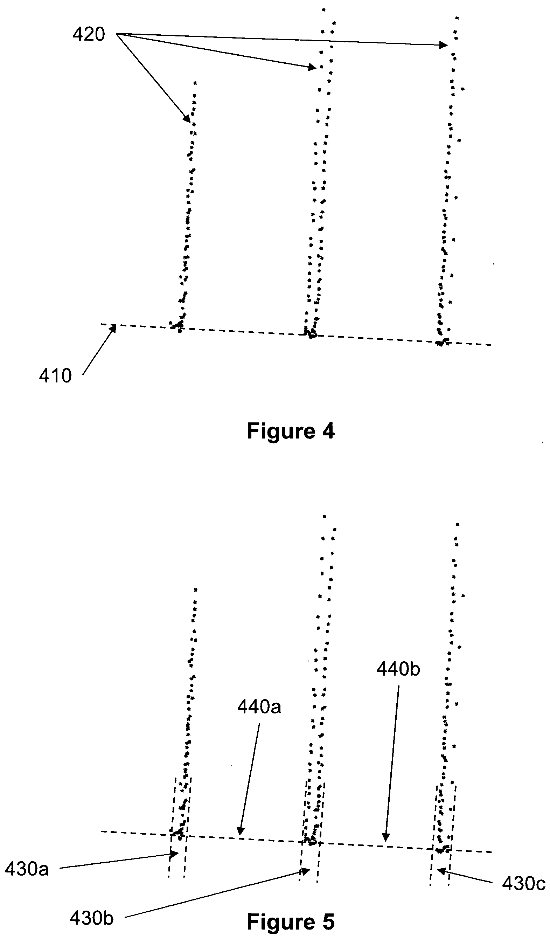

Figure 4 shows a schematic depiction of the processing of the data shown in Figure 3a. In this step of the data processing, a line 410 is fitted to the leading edge of each of the data patterns 420 in the point cloud. The leading edge of each pattern corresponds to the end face of each of the pallet stringers. Accordingly, the fitted line should be linear, or substantially linear. The fitted line can be regarded as representing the front edge of the pallet or as the x-axis of the pallet.

Figure 5 shows a schematic depiction of the data shown in Figure 4, in which the leading edge 410 has been subdivided into one or more occupied regions 430 and one or more unoccupied regions 440. The or each occupied regions are defined by a cluster of data points in the point cloud which are on, or near to, the leading edge. The or each unoccupied regions are defined as the space between occupied regions, that is portions of the leading edge where there are no point cloud data points. Referring to Figure 5 it can be seen that the first occupied region 430a corresponds to the data points generated from the left-hand stringer, second occupied region 430b corresponds to the data points generated from the central stringer and third occupied region 430c corresponds to the data points generated from the right-hand stringer. Furthermore, the first unoccupied region 440a is the space between the first occupied region 430a and the second occupied region 430b, whilst the second unoccupied region 440b is the space between the second occupied region 430b and the second occupied region 430c.

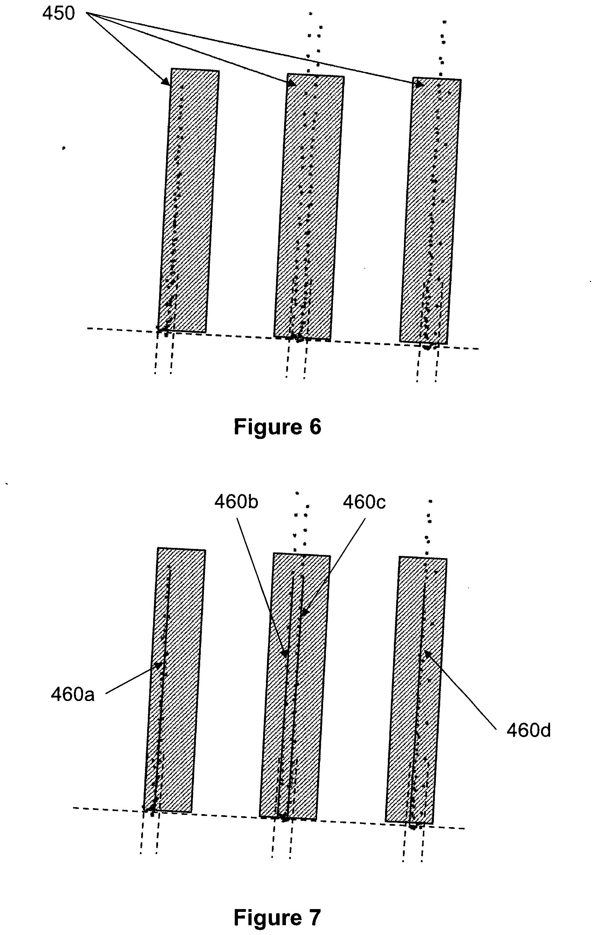

Figure 6 shows a schematic depiction of a number of regions of interest 450 (ROIs) being defined within the point cloud, such that one ROI is formed around each portion of the data patterns 420. Within each of these ROIs, edges are detected using a line-of-sight line-fitting algorithm. The line-fitting may be constrained such that a line can only contain data points which correspond to an outside edge of a stringer. This constraint reduces the risk that data received from both sides of a narrow stringer is used in the line-fitting, which could potentially lead to a less accurate outcome:

Figure 7 shows a schematic depiction of the data shown in Figure 6 after line fitting has been performed on the data in the ROls. Figure 7 shows that a first line 460a representative of the inner edge of the left-hand stringer has been fitted. Similarly, the edges of the central stringer are represented by fitted lines 460b and 460c. The inner edge of the right-hand stringer is represented by fitted line 460d. The fitted lines should be substantially parallel to each other and may be regarded as being parallel with the y-axis of the pallet.

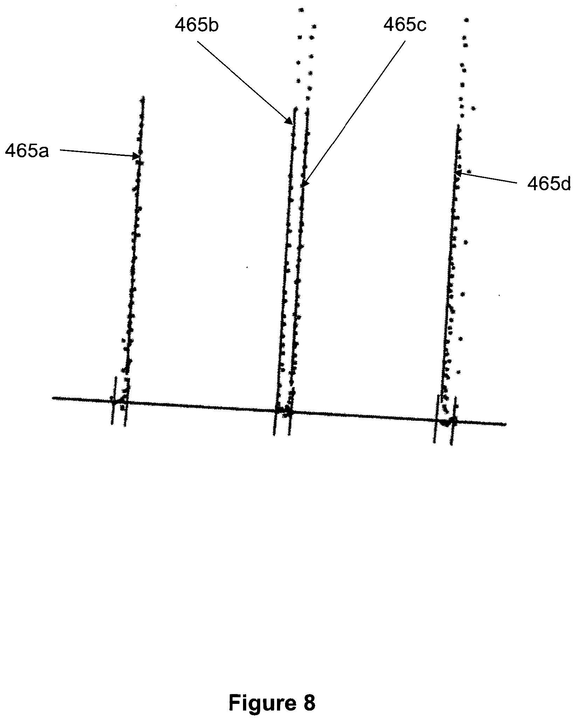

Figure 8 shows a schematic depiction of the data shown in Figure 7 after a data refinement process has taken place. For example, each of the data points may be assigned to at most one edge of a pallet structure and/or data points near to pallet structure may be suppressed. The lines representing the edges of the pallet structures may then be re-fitted to the data points, as shown by lines 465a, 465b, 465c, 465d, which correspond to line 460a, 40b, 460c and 460d of Figure 7.

These re-fitted lines 465 can then be used by the robotic vehicle to judge the position and orientation of the pallet. In one example, the robotic vehicle will approach the pallet such that the extended forks 132 134 of the robotic vehicle are substantially parallel to the y-axis of the pallet. Similarly, the robotic vehicle may also approach the pallet such that each of the forks are substantially equidistant from the central stringer of the pallet. The robotic vehicle may then manoeuvre to approach the pallet such that the forks are inserted into the pallet at a suitable position and orientation. Once the pallet forks have been inserted into the pallet then the forks can be actuated such that the pallet, and any load carried on the pallet, is received on the robotic vehicle, enabling the robotic vehicle to move the pallet to a further location.

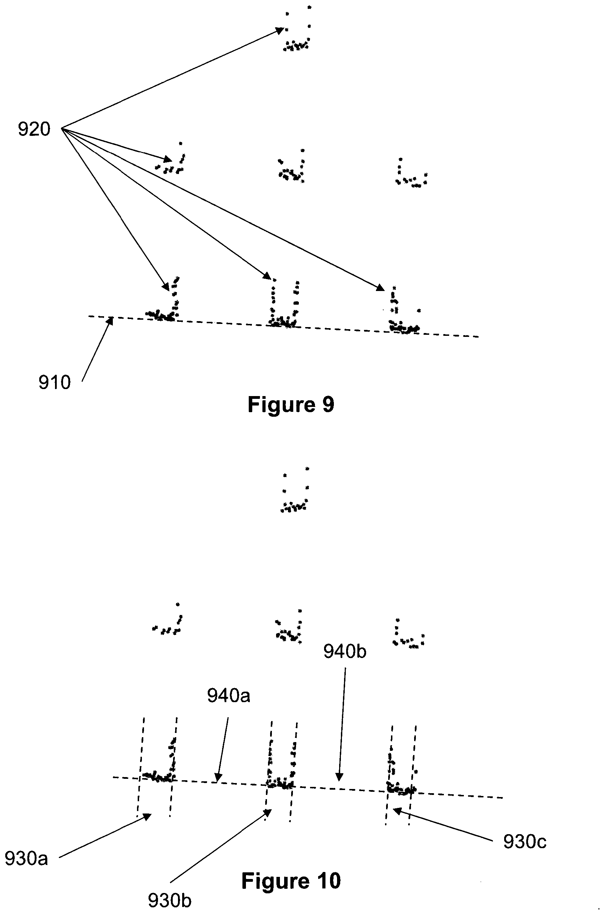

Figure 9 shows a schematic depiction of the point cloud data shown in Figure 3b (which is generated when a EUR2 pallet, which is a block pallet, is scanned by the sensors of a robotic vehicle) and a a line 910 is fitted to the leading edge of each of the data patterns 920 in the front row of the point cloud. The leading edge of each of these patterns corresponds to the end face of each block in the side of the pallet facing the robotic vehicle. Accordingly, the fitted line should be linear, or substantially linear. The fitted line 910 can be regarded as representing the front edge of the pallet (i.e. the x-axis of the pallet).

Figure 10 shows a schematic depiction of the data shown in Figure 9, in which the leading edge 910 has been subdivided into one or more occupied regions 930 and one or more unoccupied regions 940. The or each occupied regions are defined by a cluster of data points in the point cloud which are on, or near to, the leading edge. The or each unoccupied regions are defined as the space between occupied regions, that is portions of the leading edge where there are no point cloud data points. Referring to Figure 10 it can be seen that the first occupied region 930a corresponds to the data points generated from the left-hand block, second occupied region 930b corresponds to the data points generated from the central block and third occupied region 930c corresponds to the data points generated from the right-hand block. Furthermore, the first unoccupied region 940a is the space between the first occupied region 930a and the second occupied region 930b, whilst the second unoccupied region 940b is the space between the second occupied region 930b and the second occupied region 930c.

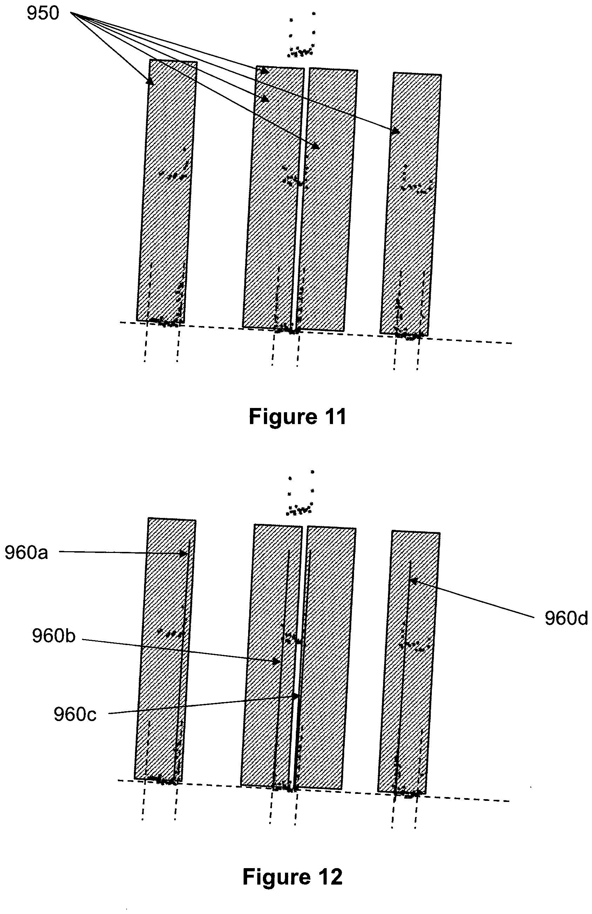

Figure 11 shows a schematic depiction of a number of regions of interest 950 (ROIs) being defined within the point cloud, such that one ROI is formed around each portion of the data patterns 920. Within each of these ROIs, edges are detected using a line-of-sight line-fitting algorithm. The line-fitting may be constrained such that a line can only contain data points which correspond to an outside edge of a stringer. This constraint reduces the risk that data received from both sides of a narrow stringer is used in the line-fitting, which could potentially lead to a less accurate outcome.

Figure 12 shows a schematic depiction of the data shown in Figure 11 after line fitting has been performed on the data in the ROls. Figure 12 shows that a first line 960a representative of a line connecting the inner faces of the pallet blocks on the left-hand side of the pallet has been fitted. Similarly, a line fitted to the left-hand and right-hand faces of the central blocks of the pallet are represented by fitted lines 960b and 960c respectively. The inner faces of the right-hand blocks are represented by fitted line 960d. The fitted lines should be substantially parallel to each other and may be regarded as being parallel with the y-axis of the pallet.

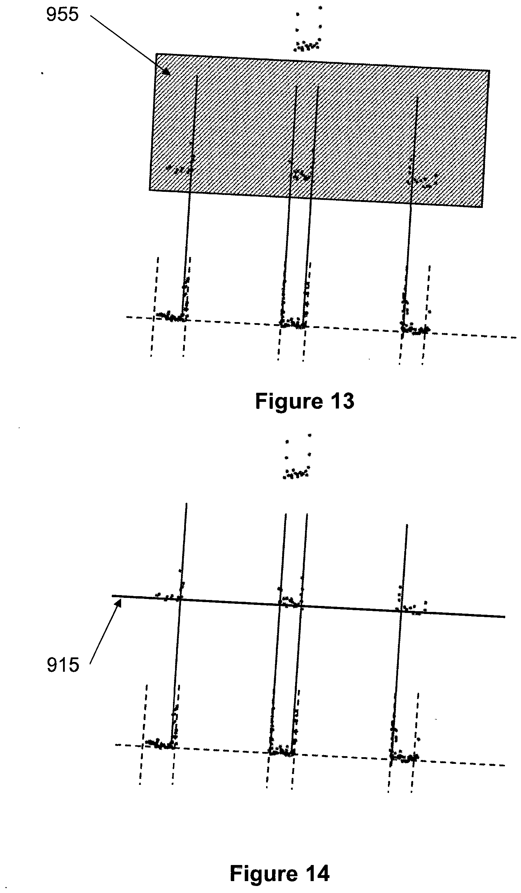

Figure 13 shows a schematic depiction of the data and fitted lines of Figure 12, in which a further region of interest 955 is added. This further ROI is intended to capture the data points which represent the reflections from the internal blocks in a direction parallel to the front-edge of the pallet (that is, the x-axis of the pallet). A line 915 can be fitted to these data points, as is shown in Figure 14.

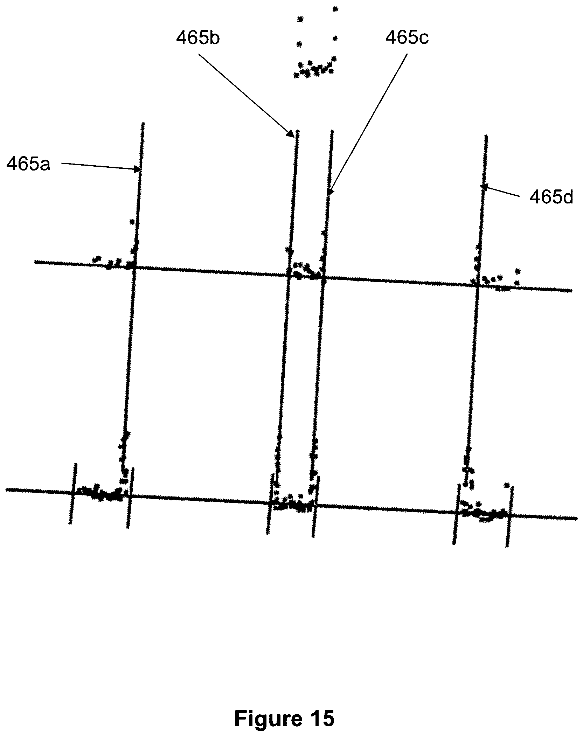

Figure 15 shows a schematic depiction of the data shown in Figure 14 after a data refinement process has taken place. For example, each of the data points may be assigned to at most one edge of a pallet structure and/or data points near to a pallet structure may be suppressed. The lines representing the edges of the pallet structures may then be re-fitted to the data points, as shown by lines 965a, 965b, 965c, 965d, which correspond to line 960a, 960b, 960c and 960d of Figure 12.

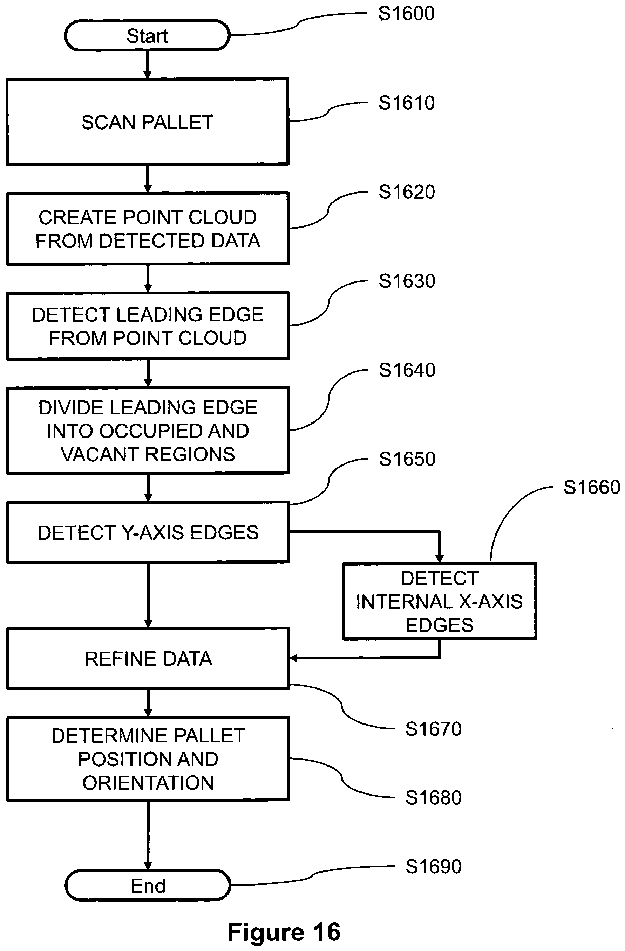

Figure 16 shows a schematic depiction of a method according to the present disclosure, the method starting at step S1600 and proceeding to the scanning of the pallet at S1610. At step S1620 the data generated by the sensors which scan the pallet is used to form a point cloud. The point cloud data is then processed to determine the leading edge of the pallet (S1630) and the point cloud data is further analysed to divide the leading edge into one or more occupied and one or more vacant regions (S1640). At step S1650, the y-axis edges are detected from the point cloud data. Subsequent to this, the data can be refined at step S1670 prior to the position and orientation of the pallet with reference to the robotic vehicle being determined. The process then ends at step S1690. Once the pallet position and orientation has been determined then the robotic vehicle may re-position and/or re-orient itself accordingly, such that the robotic vehicle can move towards the pallet and insert the forks of the robotic vehicle such that the forks enter the apertures of the pallet and are substantially parallel to the y-axis of the pallet. In an alternate method, after the y-axis edges have been detected at stage S1650, the point cloud data may be processed to determine the internal x-axis edges at step S1660. Once the internal x-axis edges have been determined then the data may be refined at step S1670. In a further alternative, the data refinement step at steps S1670 may be discarded if the data generated after step S1650 (or step S1660 if it is necessary to detect internal x-axis edges) is adequate to determine the pallet position and orientation such that the robotic vehicle is able to accurately and repeatably insert the forks into the interior of the pallet.

It should be understood that the preceding discussion is based on an assumption that when a robotic vehicle approaches a stringer pallet it approaches it from one of the two open sides of the pallet, that is a side which comprises apertures into which the forks of the robotic vehicle can be inserted. In the event that the robotic vehicle approaches one of the two closed sides of a stringer pallet then the scanning of the pallet will result in the generation of a point cloud which comprises an unbroken line, indicating the external face of the stringer. In such a case, the robotic vehicle may re-position itself such that it is facing one of the open sides of the pallet before initiating the scanning process in order to determine the location and orientation of the pallet in order to be able to insert the forks into the pallet.

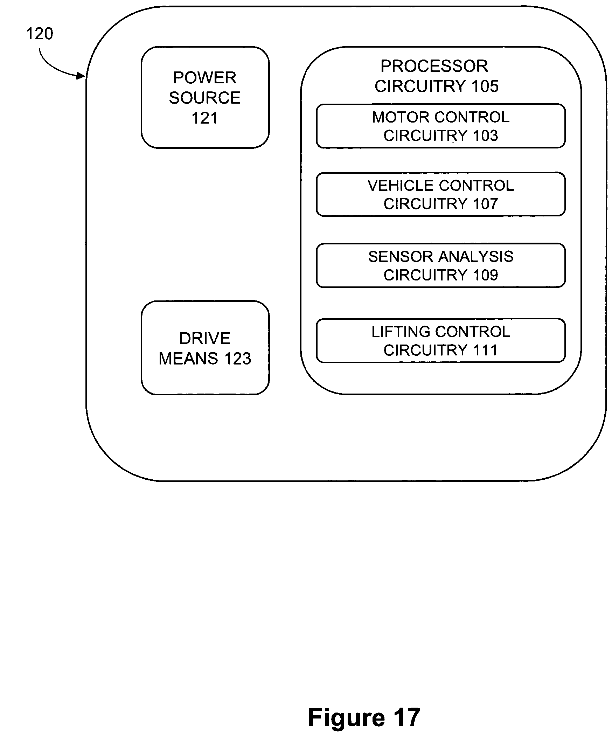

Figure 17 shows a schematic depiction of further aspects of the robotic vehicle that are not described above with reference to Figure 1. The example robotic vehicle 100 comprises a body 120, processor circuitry 105 to control the operations of the robotic vehicle and a drive means 123. The drive means may comprise one or more motors (e.g. electric motor(s) and/or other drive mechanism(s)) to cause movement of the body 120 via the wheel(s) of the robotic vehicle 100. The robotic vehicle may further comprise a power source 121 which provides power to the drive means 123 and the processor circuitry 105. The power source may be rechargeable and may comprise one or more batteries.

The processor circuitry 105 may comprise motor control circuitry 103 (e.g. hardware and/or software components) to control, for example, the speed of the robotic vehicle 100. One or more components of the motor control circuitry 103 can be implemented by processor circuitry 105 of the vehicle 100. The robotic vehicle 100 can include an autonomous vehicle. The robotic vehicle 100 comprises vehicle control circuitry 107 to control movement of the autonomous or self-driving robotic vehicle 100. One or more components of vehicle control circuitry 107 can be implemented by the processor circuitry 105 of the robotic vehicle 100, processor circuitry of another user device, a remote computing system and/or cloud-based services. The robotic vehicle 100 can move to a location in a storage environment without or with limited user input control during movement of the vehicle 100. The lifting control circuitry 111 controls the lateral movement of the forks (for example, into and out of the interior of a platform) and the vertical movement of the forks to lift or lower the forks (and a platform received on the forks).

The preceding discussion has been in the context of a robotic vehicle which comprises two optical sensors. It should be appreciated that the robotic vehicle may comprise a single optical sensor or alternatively the robotic vehicle sensor may comprise more than two optical sensors. In addition to the rotation provided by lidar sensors, the robotic vehicle may rotate during the scanning of the pallet. It should be understood that other forms of optical sensor may be used as an alternative to lidar sensors. In a yet further alternative ultrasonic sensors may be used.

If the sensor(s) are not able to illuminate the long edges of a stringer (or alternatively, the side faces of pallet blocks) then the robotic vehicle may use the information obtained from the front faces of the stringers (or blocks, as appropriate) to make a determination of the pallet location and/or orientation. In such a case, the determination will be less accurate than one which is made when the long edges of the stringer(s) (or the block side faces) are illuminated by the sensor(s).

It is also possible to extract further data from the point cloud. For example, it is possible to estimate one or more of: pallet width; pallet length, stringer width (or block width), the spacing between adjacent stringers (or blocks), etc. These estimations may be used to identify the type of a pallet from a database of known pallet types. In an alternative, the pallet type may be identified using another technique, for example using technique of the Applicant's co-pending application US18/785,563 (the contents of which are hereby incorporated by reference. The additional data extracted from the point cloud may be used in conjunction with a further pallet identification method.

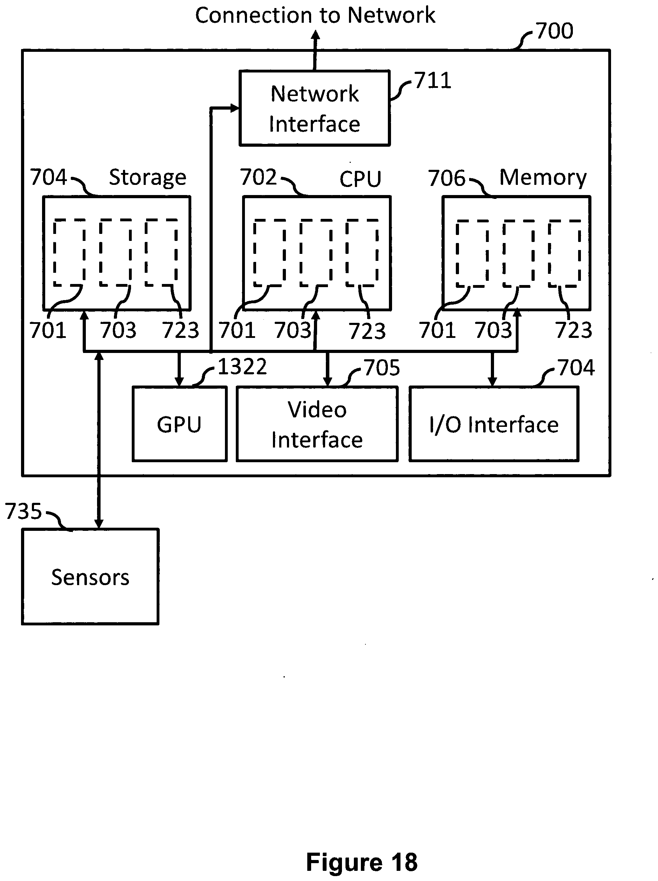

It will be understood that a robotic vehicle according to the present disclosure may comprise one or more computing devices, for example for instantiating the processor circuitry 105. Figure 18 shows a schematic depiction of a computer device 700 that may include a central processing unit ("CPU") 702 connected to a storage unit 714 and to a random access memory 706. The CPU 702 may process an operating system 701, application program 703, and data 723. The operating system 701, application program 703, and data 723 may be stored in storage unit 714 and loaded into memory 706, as may be required. Computer device 700 may further include a graphics processing unit (GPU) 722 which is operatively connected to CPU 702 and to memory 706 to offload intensive image processing calculations from CPU 702 and run these calculations in parallel with CPU 702. The computing device may further comprise a network interface 711, for example a WiFi interface or a cellular interface (for example, an interface using LTE technology), to communicate with a warehouse management system and/or other systems operating in the storage environment in which the robotic vehicle operates. The computer device 700 may receive data from one or more sensors 735. These sensors may comprise the first sensor arrangement 150, the second sensor arrangement 152 and the fourth sensor arrangement 138. Data generated by one or more further sensors may also be received by the computer device and used to control the movement and operation of the robotic vehicle.

According to one aspect there is provided a load handling device comprising one or more sensors, preferably optical sensors. The sensor(s) may be used to illuminate a platform, such as a pallet. The data received from the sensor(s) may then be processed to form a point cloud. The data in the point cloud can be processed to identify the structures that form the platform such that the position and/or orientation of the platform relative to the load handling device can be determined. The load handling device may then use this platform position and/or orientation information when moving to lift the platform.

## Claims

1. A robotic vehicle comprising:
one or more optical sensors and a processor circuit, the processor circuit being configured, in use, to:
cause the one or more optical sensors to illuminate a platform;
receive data from the one or more optical sensors;
create a single point cloud from the data received from the one or more optical sensors; and
process the single point cloud to determine the position and orientation of the platform.

2. A robotic vehicle according to claim 1, wherein the processor circuit is configured to identify a plurality of platform structures in the single point cloud.

3. A robotic vehicle according to claim 2, wherein the processor circuit is configured to fit a first line to the data points representing the plurality of platform structures in the single point cloud, the line representing a leading edge of the platform.

4. A robotic vehicle according to claim 3, wherein the processor circuit is configured to divide the leading edge line into a plurality of portions such that one or more of the portions of the leading edge line correspond to platform structures and one or more of the portions of the leading edge line correspond to regions between platform structures.

5. A robotic vehicle according to claim 4, wherein the processor circuit is configured to further process the single point cloud to identify one or more internal platform structures.

6. A robotic vehicle according to claim 5, wherein the processor circuit is configured to fit a second line to the data points representing each of the one or more internal platform structures, wherein the one or more second lines are substantially perpendicular to the first line representing the leading edge of the platform.

7. A robotic vehicle according to claim 1, wherein the robotic vehicle is, in use, re-positioned and/or re-orientated in response to the determination of the position and orientation of the platform.

8. A method of operating a robotic vehicle, the method comprising:
illuminating a platform using one or more optical sensors;
receiving data from the one or more optical sensors;
creating a single point cloud from the data received from the one or more optical sensors; and
processing the single point cloud to determine the position and orientation of the platform.

9. A method according to claim 8, wherein the method comprises identifying a plurality of platform structures in the single point cloud.

10. A method according to claim 9, wherein the method comprises fitting a first line to the data points representing the plurality of platform structures in the single point cloud, the line representing a leading edge of the platform.

11. A method according to claim 10, wherein the method comprises dividing the leading edge line into a plurality of portions such that one or more of the portions of the leading edge line correspond to platform structures and one or more of the portions of the leading edge line correspond to regions between platform structures.

12. A method according to claim 11, wherein the method comprises further processing the single point cloud to identify one or more internal platform structures.

13. A method according to claim 12, wherein the method comprises fitting a second line to the data points representing each of the one or more internal platform structures, wherein the one or more fitted second lines are substantially perpendicular to the first line representing the leading edge of the platform.

14. A method according to claim 12 wherein the method comprises fitting a third line to the data points representing each of the one or more internal platform structures, wherein the one or more fitted third lines are substantially parallel to the line representing the leading edge of the platform.

15. A non-transitory computer-readable medium having instructions stored thereon that cause at least one processor circuit to at least:
cause one or more optical sensors to illuminate a platform;
receive data from the one or more optical sensors;
create a single point cloud from the data received from the one or more optical sensors; and
process the single point cloud to determine the position and orientation of the platform.
